# EUROPEAN PATENT APPLICATION

(11) **EP 1 802 156 A1**
(43) Date of publication of application: **27.06.2007**
(21) Application number: 05787767.2
(22) Date of filing: 30.09.2005
(51) Int. Cl.: H04Q 7/38, G06K 19/07, H04M 1/00

(54) **MOBILE TERMINAL DEVICE**

(30) Priority: 05.10.2004 JP 2004292096
(71) Applicant: NTT DoCoMo INC., Chiyoda-ku Tokyo 100-6150 (JP)
(72) Inventor: YAMANE, Naoki, IP Dept., NTT DoCoMo, Inc., Tokyo 100-6150 (JP); KOMINE, Takuro, IP Dept., NTT DoCoMo, Inc., Tokyo 100-6150 (JP); WASHIO, Satoshi, IP Dept., NTT DoCoMo, Inc., Tokyo 100-6150 (JP)
(74) Representative: Schwabe - Sandmair - Marx
(86) International application number: PCT/JP2005/018088
(87) International publication number: WO 2006/038546

(57) **Abstract**

When a mobile terminal 21 is brought close to an external R/W, a FeliCa chip 213 in the mobile terminal 21 detects an information signal via a communication section 222. A header identifying section 212 identifies a header of the information signal received via the communication section 222, and when Felica content is included in the information signal, stores the FeliCa content in the FeliCa ship 213. Based on a control signal, a FAM 215 refers to a table, and instructs the representation corresponding to the FeliCa content to a mobile terminal OS 216. According to the instruction from the FAM 215, the mobile terminal OS 216 performs the representation using a speaker 217, lamp 218, display 219 and/or vibrator 220.

## Description

### Technical Field

The present invention relates to a mobile terminal device, and more particularly, to a mobile terminal device for making a user recognize acquisition of proximity card function content with ease.

### Background Art

In recent years, IC cards have become widespread such that an IC is embedded in a plastic card. The IC card can be installed with various functions of a variety of cards such as a credit card, a debit card and the like. Techniques have been developed for installing the IC card functions (proximity card function) in a mobile terminal device (Japanese Unexamined Patent Publication No. 2002-84345).

When a user holds a mobile terminal device installed with the IC card function over an external reader/writer (R/W) to perform communication between the mobile terminal device and the external R/W, for example, in the case of performing authentication of the IC card and the like, in order to make the user recognize whether authentication has normally been performed, the external R/W side needs to be installed with a function of sounding an alarm, emitting an LED or the like when authentication has been normally performed.

### Disclosure of Invention

### Problems to be Solved by the Invention

However, in the conventional configuration, it is required to provide the external R/W side with the function of making a user recognize whether authentication has normally been performed, and a problem arises that the configuration of the external R/W becomes complicated.

It is an object of the invention to provide a mobile terminal device enabling a user to recognize acquisition of proximity card function content with ease.

A mobile terminal device of the invention has a terminal body, an acquiring section that is provided in the terminal body and that acquires proximity card function content from an external apparatus, a proximity card function control section that performs control to use the proximity card function content using various functions installed in the terminal body, and a representation section that is provided in the terminal body and that performs representation when the proximity card function content is acquired from the external apparatus.

According to this configuration, when the proximity card function content informed from the external apparatus is acquired, the representation is performed using various functions beforehand installed in the mobile terminal device, and it is thus possible to make the user recognize acquisition of the proximity card function content with ease, without providing the external apparatus side with any specific function.

In the mobile terminal device of the invention, it is preferable that the representation section performs a different kind of representation corresponding to the proximity card function content. According to this configuration, the user is capable of recognizing acquisition of specific proximity card function contention readily by the representation in the representation section.

In the mobile terminal device of the invention, it is preferable that the proximity card function control section has a table that associates the representation performed by the representation section with the proximity card function content. According to this configuration, it is made possible to manage the representation in acquiring the proximity card function content. Accordingly, by referring to the table, it is possible to perform predetermined representation easily.

In the mobile terminal device of the invention, the representation section is preferably at least one selected from a group consisting of a speaker, a lamp, a display and a vibrator.

In the mobile terminal device of the invention, it is preferable that the acquiring section transmits an acquisition signal to the external apparatus when acquiring the proximity card function content. According to this constitution, the mobile terminal device is capable of notifying the external apparatus of normal acquisition of the proximity card function content.

According to the invention, the representation is performed in the mobile terminal device when the proximity card function content informed from the external apparatus is acquired, and it is thereby possible to make the user recognize the acquisition of the proximity card function content with ease.

### Brief Description of Drawings

FIG. 1 is a diagram illustrating a schematic configuration of a proximity card function management system including a mobile terminal device according to one embodiment of the invention;
FIG.2 is a diagram illustrating a configuration of a storage area that stores proximity card function content in the mobile terminal device according to one embodiment of the invention; and
FIG. 3 is a diagram illustrating the proximity card function content in a common area in a display screen of the mobile terminal device.

### Best Mode for Carrying Out the Invention

An embodiment of the invention will specifically be described below with reference to accompanying drawings.

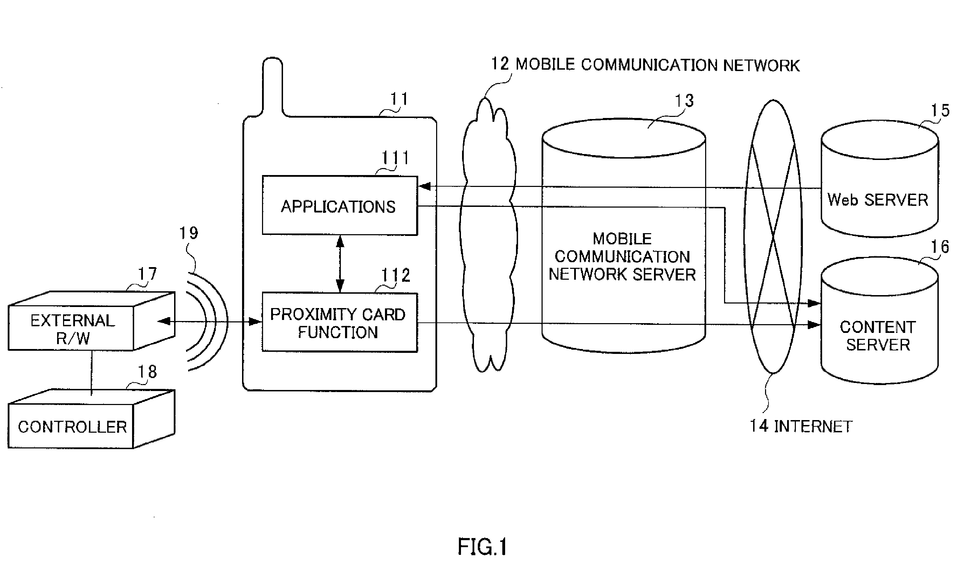

FIG. 1 is a diagram illustrating a schematic configuration of a proximity card function management system including a mobile terminal device according to one embodiment of the invention.

The system as shown in FIG. 1 mainly has a mobile terminal (cellular telephone) 11 according to the invention, a mobile communication network server 13 connected to the mobile terminal 11 via a mobile communication network 12, and a Web server 15 and a proximity card function content server 16 each connected to the mobile terminal 11 via a network such as the Internet 14.

The mobile terminal 11 has functions of being able to execute various applications 111 and proximity card function 112. Further, the mobile terminal 11 has a reader/writer (not shown) that is the acquiring section capable of transmitting and receiving information to/from an external reader/writer (R/W) 17. In addition, the external reader/writer 17 is driven by a controller 18.

The proximity card function 112 in the mobile terminal 11 is a function of being able to add and delete proximity card e.g. proximity IC card function content, and for example, includes FeliCa (trademark) or the like. To implement the proximity card function 112, the mobile terminal is installed with a storage area to store the content, and an operation system (controller) for the proximity card function

The mobile communication network 12 is a network between the mobile terminal 11 and communication network server 13. The communication network 12 includes a mobile packet communication network, as well as the ordinary communication network. The mobile communication network server is, for example, an i mode (trademark) server, serves the gateway function of connecting the mobile communication network 12 and Internet 14, and more particularly, has the information distribution function, mail transmission/reception function, mail storage function, contract customer management function, information provider management function and information fee charging function.

The network includes the Internet 14, and other networks such as, for example, LAN, WAN and the like. The Web server 15 is a server on the Internet 14 that stores applications 111 to be downloaded to the mobile terminal 11.

The content server 16 stores respective pieces of proximity card function content provided from a plurality of service providers that provides the proximity card function content, while performing addition and deletion of the proximity card function content via the controller that implements the proximity card function and the network, initialization, and read and write of data. Further, the content server 16 is installed with an application for the content server 16 to execute processing on the controller that implements the proximity card function. In addition, the service provider may have the content server on the Internet 14 together with the Web server thereof, or may have the content server on a different network from the Internet 14, aside from the Web server thereof. For example, when the proximity card function is FeliCa, the content server 16 is a FeliCa server.

In the system with the above-mentioned configuration, the mobile terminal 11 performs control of addition and deletion of the proximity card function content via the application that provides the proximity card function content, while performing control of addition of the proximity card function content acquired through a communication section of the mobile terminal 11. Thus, it is possible to perform control of addition of the proximity card function content both through the application and through the communication section without via the application, and the user is capable of performing addition and deletion of the proximity card function with easy operation.

In the mobile terminal 11, when a user performs control of addition and/or deletion of the proximity card function content via the application 111 that provides the proximity card function content, the user gains access to the proximity card function 112 by the application 111 of the mobile terminal 11, for example, i application (trademark). Then, the user adds and/or deletes the proximity card function content on the application 111.

In the mobile terminal 11, when a user performs control of addition of the proximity card function content via the communication section, the user adds the proximity card function content directly from the external R/W 17 without using the application 111. At this point, the terminal acquires the content information associated with the added proximity card function content from the Web server 15.

The external R/W 17 always informs the proximity card function content. By bringing the mobile terminal 11 close to the external R/W 17, it is possible to take the proximity card function content in the mobile terminal 11 with ease.

In addition, in the system with the above-mentioned configuration, it is possible to perform information distribution, mail transmission/reception, mail storage, contract customer management, information provider management and information fee charging, but to simplify the descriptions, specific procedures thereof and like are not described herein.

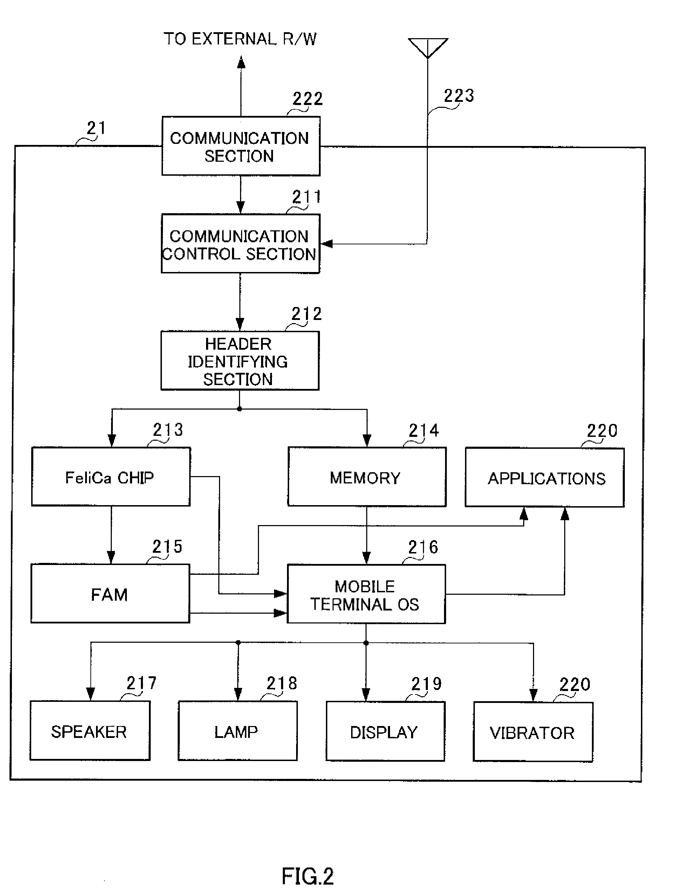

FIG. 2 is a block diagram illustrating a schematic configuration of the mobile terminal device according to one embodiment of the invention. In addition, the configuration as shown in FIG.2 is simplified to explain the invention, and is assumed to have structural elements installed in a typical mobile terminal device. Described herein is the case that the proximity card function content is FeliCa content.

A mobile terminal device 21 as shown in FIG.2 mainly has in the terminal device body a communication control section 211 that controls communication with an external R/W and the network, a header identifying section 212 that identifies a header contained in content information acquired from the external R/W, a FeliCa chip 213 that is activated by an electromagnetic wave to store the proximity card function content, memory 214 that stores applications and the like associated with service, FeliCa Application Manager (FAM) 215 that performs control to use the FeliCa content, a terminal operation system (mobile terminal OS) 216 that executes various functions of the mobile terminal 21, a speaker 217 that outputs a sound, a lamp 218 that emits light, a display 219 that displays various images and moving pictures, a vibrator 220 that generates vibration, and applications 221 such as a browser, menu, viewer, Java (trademark) and the like. The mobile terminal device 21 further has a communication section 222 that acquires information from the external R/W, and an antenna 223 to transmit and receive radio signals.

The communication control section 211 performs control of radio communication between the mobile terminal 21 and another mobile terminal device or other communication apparatus, control of communication with the external R/W via the communication section 222, and the like. For example, the communication control section 211 receives a radio signal from the antenna 223, while transmitting via the antenna 223 a signal to transmit to another mobile terminal or other communication apparatus. The communication control section 211 further sends a signal informed from the external R/W to the FeliCa chip 213 via the communication section 222.

In this embodiment, it is configured that the FeliCa content is acquired from the external R/W via the communication section 222. In addition, as the communication section 222, the section is only required to be able to acquire the information from the external R/W. Further, the communication control section 211 may be configured to perform authentication processing in transmitting and/or receiving a signal from/to the external R/W.

The header identifying section 212 identifies a header added to a signal received via the communication section 222. For example, the header is used to identify that the received information is FeliCa content or other information. Then, using this header, a determination is made on whether the received information is stored in the FeliCa chip 213 or memory 214. Accordingly, the header identifying section 212 identifies a header of a received signal, and stores the received information in the FeliCa chip 213 when the information is FeliCa content, while storing the received information in the memory 214 when the information is not the FeliCa content. In addition, the header identifying section 212 may identify a header indicating information other than the subject of the content.

The FeliCa chip 213 is activated by detecting a predetermined electromagnetic wave, and receives the FeliCa content via the communication section 222, while transmitting an acquisition signal indicative of reception of the signal via the communication section 222 when necessary. Thus, by transmitting the acquisition signal, the mobile terminal 21 is capable of notifying that the FeliCa content has normally been acquired to the external R/W. Further, the FeliCa chip 213 instructs the mobile terminal OS 216 to perform predetermined representation when the FeliCa content is received. In addition, the FeliCa chip 213 is comprised of a common area, public area and free area, for example. These areas are divided, for example, corresponding to the category of FeliCa content, difference in service level, and degree in security.

The FAM 215 performs control to use the FeliCa content. In particular, the FAM 215 performs access control to easily acquire the proximity card function content from the external R/W, management of the acquired FeliCa content, and issue of commands to execute the applications 221 such as the browser, menu, FeliCa viewer and the like. The functions of the FAM 215 are described in Japanese Patent Application No. 2004-257626 by the Applicants of the invention, entire content of which is expressly incorporated by reference herein.

The mobile terminal OS 216 executes functions except the functions on FeliCa, for example, the information distribution function, mail transmission/reception function, mail storage function, contract customer management function, information provider management function and information fee charging function. Further, the mobile terminal OS 216 operates the speaker 217, lamp 218, display 219 and vibrator 220.

The speaker 217, lamp 218, display 219 and vibrator 220 constitute the representation section to perform representation in acquiring the FeliCa content from the external R/W. The representation by the representation section is performed using at least one of the speaker 217, lamp 218, display 219 and vibrator 220. In addition, a component other than the speaker 217, lamp 218, display 219 and vibrator 220 in the mobile terminal 21 may be used as the representation section.

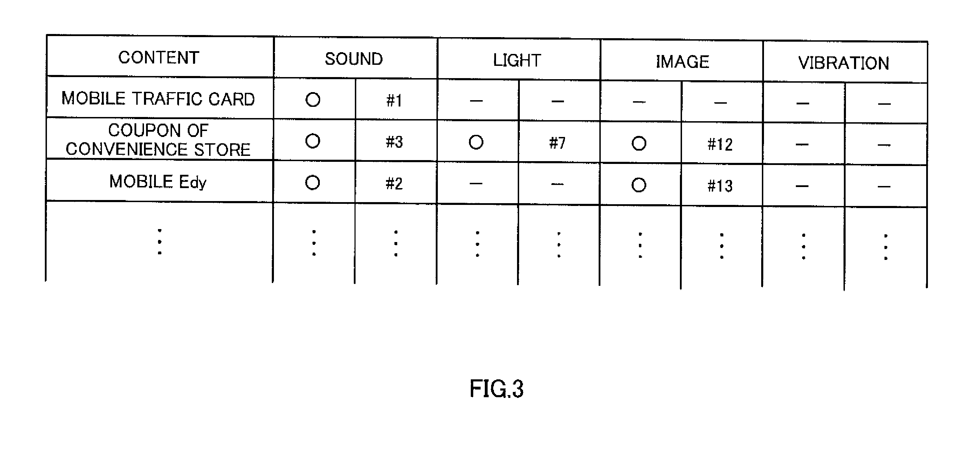

The representation by the representation section may be set to differ corresponding to the acquired FeliCa content. By making such a setting, the user is capable of recognizing that specific FeliCa content has normally been acquired with ease by the representation by the representation section. In this case, a table is used that associates the representation performed by the representation section with the FeliCa content as shown in FIG.3. It is made possible to manage the representation in acquisition of the FeliCa content. Accordingly, by referring to the table, it is possible to perform predetermined representation readily.

This table may be stored in the FAM 215 or in the memory 214. For example, when the table as shown in FIG.3 is stored in the FAM 215, in the case where the FeliCa chip 213 receives the FeliCa content, the FAM 215 refers to the table to extract the representation associated with the FeliCa content, and instructs the mobile terminal OS 216 to execute the representation. According to the instruction, the mobile terminal OS 216 operates the speaker 217, lamp 218, display 219 and/or vibrator 220. For example, when the FeliCa content is a mobile traffic card, a sound of representation pattern #1 is given. When the FeliCa content is a coupon of a convenience store, a sound of representation pattern #3 is given, light of representation pattern #7 is emitted, and an image of representation pattern #12 is displayed. When the FeliCa content is mobile Edy, a sound of representation pattern #2 is given, and an image of representation pattern #13 is displayed.

The applications 221 such as the browser, menu, viewer and the like may be configured to operate on the FAM 215 or to operation on the mobile terminal OS 216.

Described next is the operation of the mobile terminal device with the above-mentioned configuration.
The external R/W modulates a predetermined carrier with an information signal such as FeliCa content or the like, and always informs the information signal. When the mobile terminal 21 is brought close to the external R/W, first, the FeliCa chip 213 in the mobile terminal 21 detects the information signal via the communication section 222. Since the information signal is an electromagnetic wave, the electromagnetic wave activates the FeliCa chip 213.

Next, the header identifying section 212 identifies a header of the information signal received via the communication section 222, and when Felica content is included in the information signal, stores the FeliCa content in the FeliCa ship 213. At this point, when necessary, the FeliCa chip 213 transmits an acquisition signal indicative of the acquisition of the FeliCa chip to the external R/W.

When the FeliCa chip 213 acquires the FeliCa content, the chip 213 transmits a control signal indicative of the acquisition of the FeliCa content to the FAM 215. Based on the control signal, the FAM 215 refers to the table as shown in FIG.3, and instructs the representation corresponding to the FeliCa content to the mobile terminal OS 216. According to the instruction from the FAM 215, the mobile terminal OS 216 performs the representation using the speaker 217, lamp 218, display 219 and/or vibrator 220.

When a different kind of representation is performed corresponding to the type of FeliCa content, the table of the FAM 215 is referred to as described above. In the case of such a setting that specific representation is performed when FeliCa content is acquired, the FeliCa chip 213 transmits a control signal indicative of acquisition of FeliCa content without through the FAM 215 when acquiring the FeliCa content, and the mobile terminal OS 216 performs the representation based on the control signal.

Thus, in this embodiment, when the FeliCa content informed from the external R/W is acquired, since representation is performed using various functions beforehand installed in the mobile terminal 21, it is possible to make the user recognize acquisition of the FeliCa content with ease, without providing the external R/W side with any specific function.

The present invention is not limited to the above-mentioned embodiment, and is capable of being carried into practice with various modifications thereof. For example, the invention is not limited to the configuration described in the above-mentioned embodiment, and is capable of being carried into practice with various modifications thereof without departing from the scope of the invention. For example, while the above-mentioned embodiment describes the case that the FAM is used as a control section that starts up the browser, menu, and FeliCa viewer as well as the FeliCa, another control section and/or another management section capable of starting up the browser, menu, and FeliCa viewer as well as the FeliCa maybe used in the invention. Further, the above-mentioned embodiment describes the case that the proximity card function is FeliCa, but the invention is similarly applicable to a case that the proximity card function is another proximity card function other than FeliCa.

Moreover, according to the invention, as well as acquiring the above-mentioned proximity card function content, it is possible to operate a function beforehand installed in a cellular telephone corresponding to a signal informed from an external apparatus. For example, an external apparatus that informs a predetermined signal is installed at an entrance of a hospital and the like, and when a user passes by the apparatus, the cellular telephone receives the predetermined signal to enable the cellular telephone to be automatically switched to a silent mode.

The present application is based on Japanese Patent Application No.2004-292096 filed on October 5, 2004, entire content of which is expressly incorporated by reference herein.

## Claims

1. A mobile terminal device comprising:
a terminal body;
an acquiring section that is provided in the terminal body and that acquires proximity card function content informed from an external apparatus;
a proximity card function control section that performs control to use the proximity card function content; and
a representation section that is provided in the terminal body and that performs representation when the proximity card function content is acquired from the external apparatus.

2. The mobile terminal device according to claim 1, wherein the representation section performs a different kind of representation corresponding to the proximity card function content.

3. The mobile terminal device according to claim 1, wherein the proximity card function control section has a table that associates the representation performed by the representation section with the proximity card function content.

4. The mobile terminal device according to claim 1, wherein the representation section is at least one selected from a group consisting of a speaker, a lamp, a display and a vibrator.

5. The mobile terminal device according to claim 1, wherein the acquiring section transmits an acquisition signal to the external apparatus when acquiring the proximity card function content.
